# EUROPEAN PATENT SPECIFICATION

(11) **EP 3 604 048 B1**
(45) Date of publication and mention of the grant of the patent: **04.05.2022**
(21) Application number: 18776960.9
(22) Date of filing: 30.03.2018
(51) Int. Cl.: B60R 25/023, B60R 25/021, E05B 83/00, E05B 77/44

(54) **STEERING LOCK DEVICE**
LENKSCHLOSSVORRICHTUNG
DISPOSITIF DE VERROUILLAGE DE DIRECTION

(30) Priority: 30.03.2017 JP 2017067971
(43) Date of publication of application: 05.02.2020
(73) Proprietor: Alpha Corporation, Yokohama-shi, Kanagawa 236-0004 (JP)
(72) Inventor: WATANABE Yusuke, Yokohama-shi Kanagawa 236-0004 (JP)
(74) Representative: Daub, Thomas
(86) International application number: PCT/JP2018/013998
(87) International publication number: WO 2018/182024

(56) References cited:
- EP-A1- 2 130 726
- DE-A1- 1 800 882
- DE-A1- 1 962 783
- DE-A1- 2 020 359
- DE-A1- 2 035 059
- DE-B- 1 166 642
- DE-B1- 1 166 642
- DE-C- 689 139
- GB-A- 2 355 967
- JP-A- H10 264 770
- JP-U- S62 131 961

## Description

### [Technical Field]

The present invention relates to a steering lock device.

### [Background Art]

Patent Literature 1 discloses a steering lock device for locking steering of a vehicle. In the steering lock device, a drive slider and a tongue piece (lock body) which is connected to the drive slider and can freely advance to or retract from a steering column are mounted in an antitheft device body (steering frame).

The lock body is biased toward a lock position projecting into the steering column by elastic return means (compression spring) accommodated in the steering frame.

Since the lock body cannot be maintained in the lock position and can be unlocked incorrectly when a support portion for supporting the compression spring in the steering frame is destroyed by external attack and the compression spring is removed improperly, a reinforcing plate which cannot be easily broken is fixed to a wall surface supporting the compression spring in the steering frame.

Furthermore, from Patent Literature 2 a steering lock device according to the preamble of claim 1 is known, comprising a lock portion which is held in a lock portion accommodation recess formed in a frame and is freely movable between a lock position and an unlock position. The steering lock device comprises a plug which is rotatably operated from an outside of the frame and is configured to move the lock portion to the unlock position against a reaction force of a compression spring. One end of the lock portion is biased toward the lock position by the compression spring. The compression spring is supported by a spring receiving seat formed at a ceiling portion of the lock portion accommodation recess. The spring receiving seat is formed to project from a ceiling surface of the lock portion accommodation recess toward an opposite surface. The lock portion is configured to cover an abutting side end of the compression spring which is abutted on the lock portion, and is provided with a shielding portion fitted to a periphery of the spring receiving seat in the unlock position.

### [Prior Art Literature]

### [Patent Literature]

[Patent Literature 1] JP-T-2015-506864
[Patent Literature 2] DE 29 35 059 A1

### [Summary of Invention]

### [Technical Problems]

However, it takes time and effort to fix the reinforcing plate in the example of the related art according to Patent Literature 1, which reduces the manufacturing efficiency of the device.

### [Solution to Problem]

According to an embodiment of the present invention, there is provided a steering lock device having high resistance to an improper external damaging operation and high manufacturing efficiency.

According to the embodiment of the present invention, there is provided a steering lock device as in claim 1 including:
a lock portion 5 which is held in a lock portion accommodation recess 2 formed in a frame 1 and is freely movable between a lock position and an unlock position, one end of the lock portion being biased toward the lock position by a compression spring 4 which is supported by a spring receiving seat 3 formed at a ceiling portion of the lock portion accommodation recess 2, and
a plug 6 which is rotatably operated from an outside of the frame 1 and is configured to move the lock portion 5 to the unlock position against a reaction force of the compression spring 4, and
the spring receiving seat 3 is formed to project from a ceiling surface of the lock portion accommodation recess 2 toward an opposite surface.

The lock portion 5 of the steering lock device is accommodated in the lock portion accommodation recess 2 formed in the frame 1, is movable between the lock position where the lock portion projects into a steering column so as to be locked to a steering shaft and the unlock position where locking with the steering shaft is released, and is biased toward the lock position by the compression spring 4.

When the compression spring 4 is improperly removed in this state, the lock portion 5 cannot be held at the lock position by a mounting posture, and improper unlocking is possible.

Since parts such as the plug 6 are accommodated in the frame 1, an access route to the compression spring 4 is limited, and usually, the compression spring 4 is pulled out by inserting a wire or the like from a hole opened by breaking a ceiling surface of the lock portion accommodation recess 2 supporting one end of the compression spring 4 with a tool such as a driver.

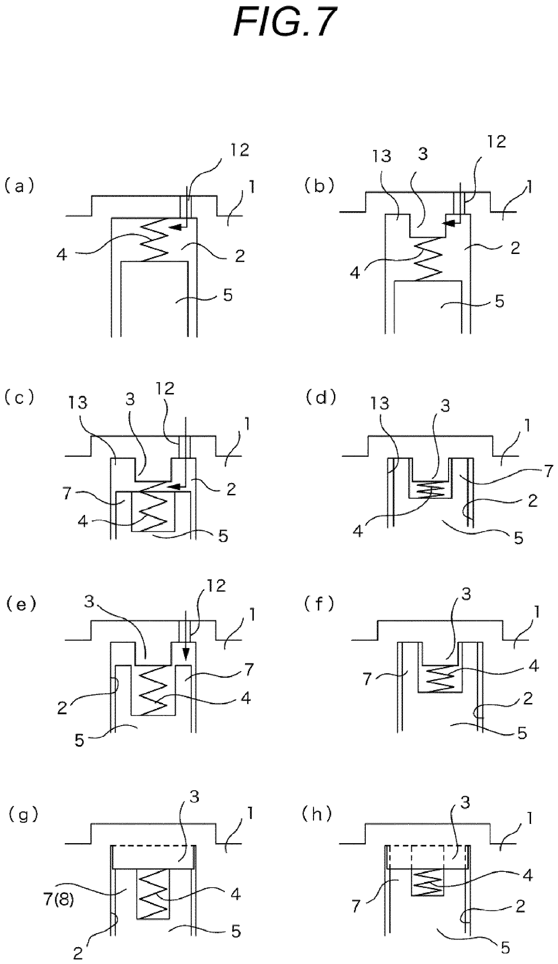

In the present invention, the spring receiving seat 3 for supporting one end of the compression spring 4 is formed to project from the ceiling surface of the lock portion accommodation recess 2, as shown in Fig. 7(b), even if a hole 12 is opened in a part of the ceiling surface, the spring receiving seat 3, that is, one end of the compression spring 4 is further located inside the lock portion accommodation recess 2, so that it is difficult to access to compression spring 4, and thus it is difficult to pull out the compression spring 4.

In particular, a large effect is exerted on the operation of moving a wire or the like along the ceiling surface of the lock portion accommodation recess 2 to lock the compression spring 4 so as to pulling the lock the compression spring 4 out of the frame 1, as shown in Fig. 7(a).

According to the embodiment of the present invention,
the lock portion 5 may be provided with a shielding portion 7 which is configured to cover an abutting side end of the compression spring 4 which is abutted on the lock portion 5, and is a fitted to a periphery of the spring receiving seat 3 in the unlock position.

In an embodiment not according to the present invention, the shielding portion 7 projecting from the lock portion 5 is disposed on a side of the compression spring 4, as shown in Fig. 7(c), and an access path to an upper end portion of the compression spring 4 can be narrowed while closing an access path to a lower end portion of the compression spring 4. As shown in Fig. 7(d), since a part of or all the projecting portion of the shielding portion 7 can be absorbed by a recess 13 formed by the protrusion of the spring receiving seat 3, there is no need to increase a height dimension of the device in the moving direction of the lock portion 5.

According to the embodiment of the present invention,
the shielding portion 7 may be formed in a cylindrical shape which surrounds the compression spring 4 around an entire length thereof when the lock portion 5 is at the lock position.

As shown in Fig. 7(e), in the present invention, a projecting height of the spring receiving seat 3 and a projecting height of the shielding portion 7 are substantially the same as a stroke length of the lock portion 5, and a tip end of the shielding portion 7 corresponds to a height of a tip end of the spring receiving seat 3 when the lock portion 5 is at the lock position. As a result, when the lock portion 5 is at the lock position, the compression spring 4 is completely covered by the shielding portion 7 over the entire length thereof, so that the access path to the compression spring 4 can be completely closed.

According to the embodiment of the present invention,
the spring receiving seat 3 may be formed in a plate shape with an elongated rectangular cross section having a plate thickness narrower than an outer diameter of the compression spring 4, and
a slit 8 which allows advancing and retracting of the spring receiving seat 3 may be formed on the shielding portion 7.

In order to prevent the spring receiving seat 3 from being fitted into an inner diameter portion of the compression spring 4, the spring receiving seat 3 needs to be sufficiently larger than the inner diameter of the compression spring 4 and is formed as a columnar body with a center of the compression spring 4 as a centroid, the shielding portion 7 surrounding the spring receiving seat 3 is large, and a posture holding function of the compression spring 4 is degraded.

In contrast, as shown in Fig. 7(g), the spring receiving seat 3 is formed in a plate shape, and the slit 8 into which the spring receiving seat 3 can be inserted is formed in the shielding portion 7, so that a substantially large support surface of the compression spring 4 can be ensured, and the shielding portion 7 can be formed into a cylindrical shape close to an outer diameter of the compression spring 4 to effectively prevent the compression spring 4 from tilting or the like. In addition, by making the plate thickness sufficiently narrow, the width of the slit 8 is also reduced, and an access to the compression spring 4 through the slit 8 can be completely prevented.

According to the embodiment of the present invention,
the lock portion 5 may be driven by a cam member 9 connected to the plug 6, and
the compression spring 4 may be disposed at symmetrical positions sandwiching the cam member 9.

In the present invention, a plurality of compression spring 4 are used, and improper damaging operation is difficult since it takes time to withdraw the compression springs 4, and the compression springs 4 are disposed at positions so as to sandwich the cam member 9 for driving the lock portion 5, that is, at positions not interfering with the cam member 9. As a result, since side areas of the cam member 9 can be used as arrangement areas of the compression springs 4, the space can be effectively used.

A lock portion 5 side support end of the compression springs 4 can be disposed at a position away from the ceiling surface of the lock portion accommodation recess 2 because it is not necessary to consider the interference with the cam member 9. As a result, a spring constant can be stabilized by securing a free length of the compression spring 4 sufficiently, and a moving space of the lock portion 5 side support end of the compression spring 4 in a direction to the ceiling surface of the lock portion accommodation recess 2 can be sufficiently secured, so that a height of the steering lock device can be reduced.

According to the embodiment of the present invention, the lock portion 5 includes a hanger member 10 which is driven by the plug 6, and a lock body 11 which is connected to the hanger member 10 and is configured to be advanced to and retracted from the steering column, and the compression springs 4 may be disposed at point-symmetrical positions with respect to a center of a cross section of the lock body 11, and the cross section is orthogonal to a moving direction of the lock body.

The balance of biasing forces of the compression springs 4 applied to the lock body 11 is improved, and tilting of the lock portion 5 is effectively prevented, so that the operation of the lock portion 5 is improved.

According to the embodiment of the present invention, since it is difficult to access the compression spring from a destructively opened hole in the ceiling of the lock portion accommodation recess, it is possible to increase the resistance to improper external damaging operation.

Since it is not necessary to mount a reinforcing member for reinforcing the ceiling portion of the lock portion accommodation recess, the manufacturing efficiency can be improved.

### [Brief Description of Drawings]

[Fig. 1] Fig. 1 is a view showing a steering lock device of the present invention. Fig. 1(a) is a perspective view, and Fig. 1(b) is a top view.
[Fig. 2] Fig. 2 is a cross-sectional view taken along line 2A-2A of Fig. 1(b).
[Figs 3] Fig. 3 is a cross-sectional view taken along line 3A-3A of Fig. 1 (b). Fig. 3(a) shows a locked state, and Fig. 3(b) shows an unlocked state.
[Fig. 4] Fig. 4 is view showing a hanger member. Fig. 4(a) is a perspective view, Fig. 4(b) is a plan view, Fig. 4(c) is viewed from a direction of arrow 4C in Fig. 4(b), and Fig. 4(d) is viewed from a direction of arrow 4D in Fig. 4(b).
[Fig. 5] Fig. 5 is a cross-sectional view taken along line 5A-5A of Fig. 3(a).
[Fig. 6] Fig. 6 is a view showing a cam member. Fig. 6(a) is a plan view, Fig. 6(b) is a cross-sectional view taken along line 6B-6B of Fig. 6(a), and Fig. 6(c) is a cross-sectional view taken along line 6B-6B of Fig. 6(a) and shows a state where a plug is rotated in an unlock direction.
[Fig. 7] Fig. 7 is a diagram showing the operation of the present invention. Fig. 7(a) is an illustrative diagram showing a problem in the related art, Fig. 7(b) is an illustrative diagram showing an action of a spring receiving seat of an embodiment not according to the present invention, Fig. 7(c) is an illustrative diagram of an embodiment not according to the present invention showing that a shielding portion is provided in a projecting manner in a lock portion, Fig. 7(d) is a diagram showing an unlocked state of Fig. 7(c), Fig. 7(e) is an illustrative diagram showing a state where a compression spring is enclosed by the shielding portion, Fig. 7(f) is a diagram showing an unlocked state of Fig. 7(e), Fig. 7(g) is an illustrative diagram showing a state where a plate-shaped spring receiving seat is formed, and Fig. 7(h) is a diagram showing an unlocked state of Fig. 7(g).

### [Description of Embodiments]

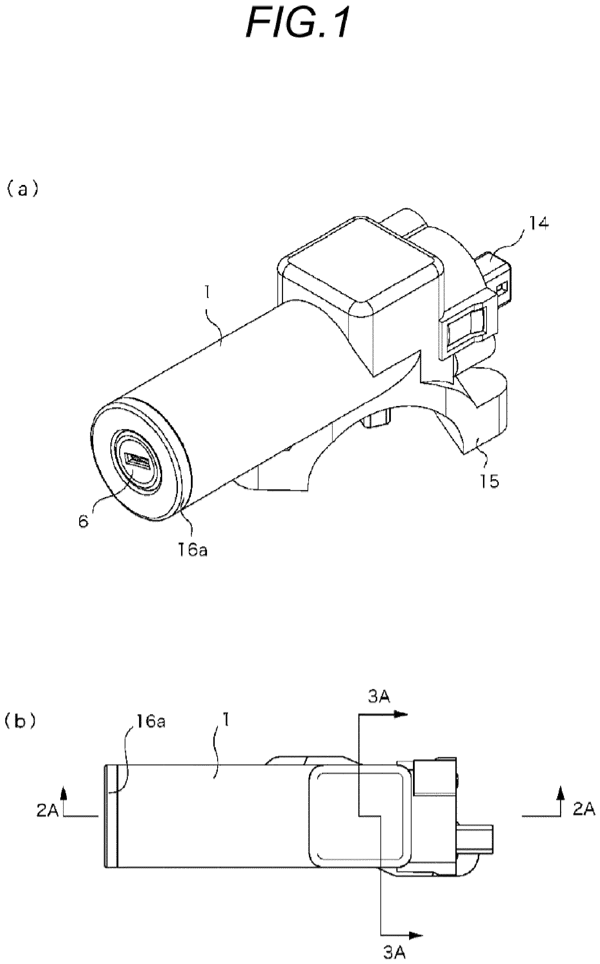

As shown in Fig. 1 and below, a steering lock device includes a frame 1 formed by zinc die casting or the like, and an ignition switch 14 is fixed to a rear end of the frame 1. Hereinafter, a left side in Fig. 1(b) is referred to as "front side", and a side in front of the drawing is referred to as "upper".

A column attachment portion 15 is formed on the frame 1, and mounting on a steering column is performed by holding the steering column by the column attachment portion 15 and a column coupler not shown.

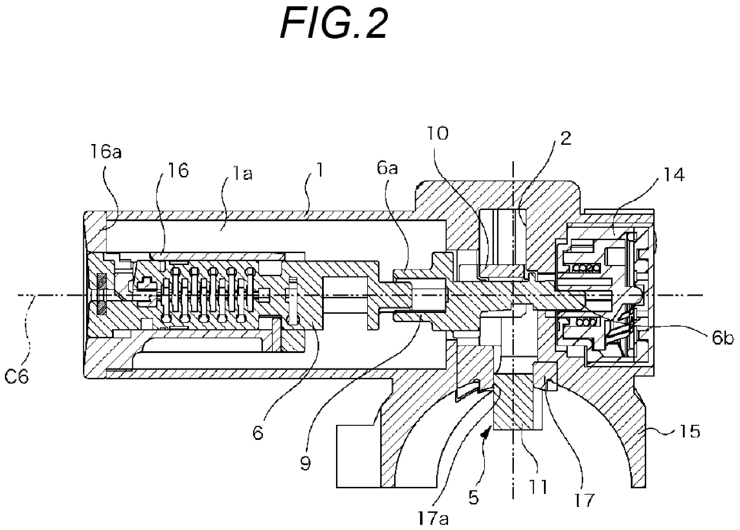

As shown in Fig. 2, a lateral hole 1a is formed in the frame 1 so as to penetrate in the front and rear, a cylinder housing 16, a plug 6 rotatably inserted into the cylinder housing 16, and a cam member 9 which is connected to a rear end of the plug 6 and is rotated along with the plug 6 are disposed in the lateral hole 1a, and a rear end of the cam member 9 is connected to the ignition switch 14.

A position cap portion 16a is formed at a front end portion of the cylinder housing 16, a position indication (not shown) for informing a rotational position of the plug 6 is engraved on a surface of the position cap portion 16a.

The plug 6 can be rotated with respect to the cylinder housing 16 by inserting a correct unlocking key (not shown), a rotational operation force to the plug 6 is transmitted to the ignition switch 14 via the cam member 9, and switching operation of the engine start circuit or the like of the vehicle can be performed.

In the frame 1, a lock portion accommodation recess 2 is formed whose center line is orthogonal to a rotation center (C6) of the plug 6 and whose upper end surface is closed. The lock portion accommodation recess 2 is opened at a center of the column attachment portion 15 and is closed by a bottom wall member 17 after a lock portion 5 and a compression spring 4 are installed.

The lock portion 5 is formed by connecting a hanger member 10 to an upper end of the rod-shaped lock body 11. The lock body 11 has a substantially rectangular cross-sectional shape, and is inserted into a rectangular opening 17a opened in the bottom wall member 17.

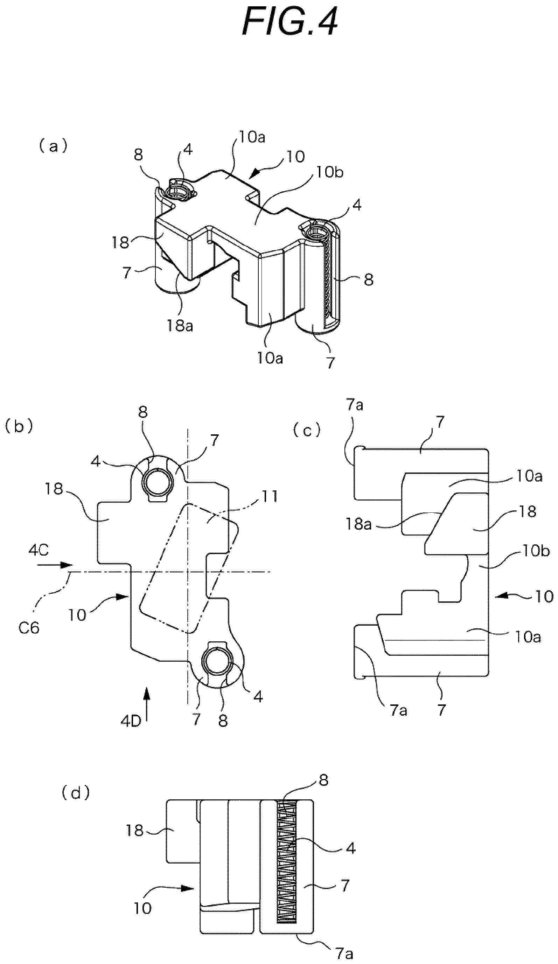

As shown in Fig. 4, the hanger member 10 is formed by bridging two block portions 10a by a bridging portion 10b, and a cam projection portion 18 having a bottom surface as a cam surface 18a is provided to project forward from one block portion 10a.

Further, a shielding portion 7 is provided to project laterally on both block portions 10a of the hanger member 10. A part of a side wall of the block portion 10a is used as a part of an inner wall of the shielding portion 7, the shielding portion 7 has a bottomed cylindrical shape having a bottom surface positioned further downward than a bottom surface of the block portion 10a, and as to be described later, the bottom surface of the shielding portion 7 serves as a stopper surface 7a which determines a downward stroke position of the hanger member 10.

As shown in Fig. 4(b), the shielding portions 7 are disposed at point-symmetrical positions with respect to a center of the lock body 11, and the compression springs 4 are accommodated in the respective shielding portions 7. An inner diameter of the shielding portion 7 is formed to be slightly larger than an outer diameter of the compression spring 4, and inclination of the compression spring 4 in the shielding portion 7 is regulated. The compression springs 4 are disposed at point-symmetrical positions with respect to the center of the lock body 11, and thus biasing forces of the compression springs 4 are loaded at symmetrical positions, so that smooth movement is ensured.

Further, the shielding portion 7 is provided with a slit 8 which is opened over an entire length in an upper-lower direction except the bottom wall. The slits 8 are formed to open left and right wall surfaces of the cylinders formed by the shielding portions 7, and a width dimension is set such that it is difficult to pull out the compression spring 4 covered by the shielding portion 7 laterally.

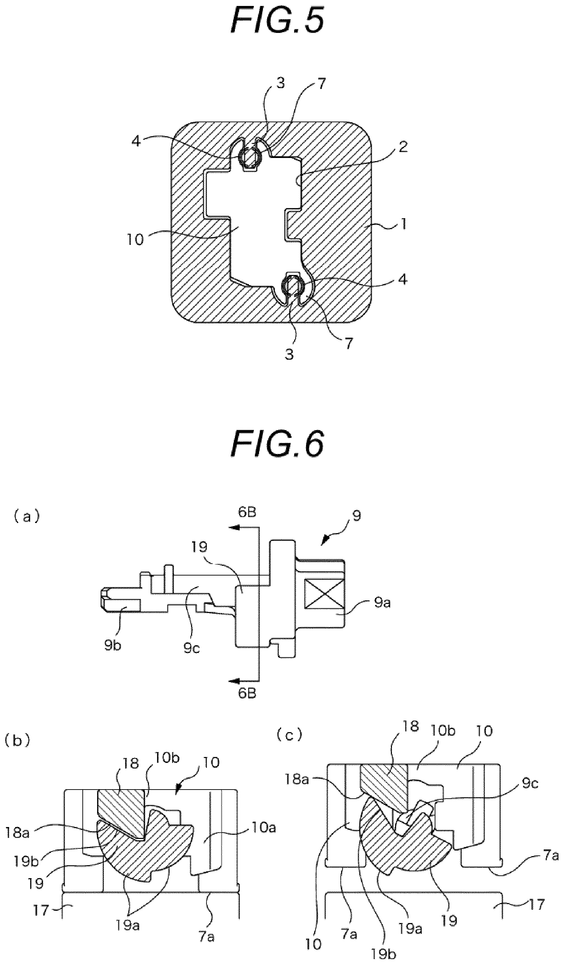

As shown in Fig. 5, the hanger member 10 formed as described above is vertically and slidably inserted into the lock portion accommodation recess 2 having a cross-sectional shape substantially matching a shape of the hanger member 10 in a plan view, and in the inserted state, an upper end of the compression spring 4 is abutted on a spring receiving seat 3 protruding from a ceiling portion of the lock portion accommodation recess 2.

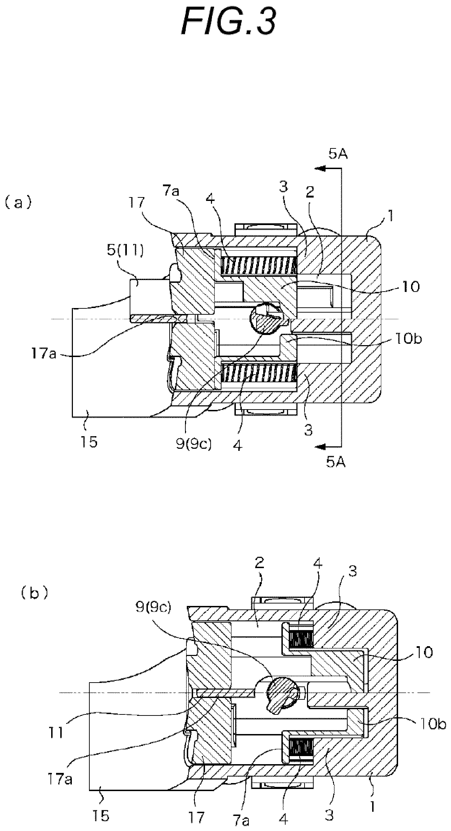

In the present embodiment, the spring receiving seat 3 is formed in a plate shape connecting both a side wall surface of the lock portion accommodation recess 2 and a ceiling wall, and as shown in Figs. 3 and 5, the spring receiving seat 3 is disposed at a position overlapping with the slit 8 of the shielding portion 7 in a plan view. The spring receiving seat 3 has a thickness dimension that can be fitted to the slit 8, and further, a projecting dimension from the inner wall surface of the lock portion accommodation recess 2 is set to be able to bridge the upper end of the compression spring 4 along the diameter direction thereof, so that dropout of the compression spring 4 from the spring receiving seat 3 is completely prevented.

Meanwhile, as shown in Fig. 6, the cam member 9 is an axial member provided with a connecting portion 9a to the plug 6 at a front end and a connecting portion 9b to the ignition switch 14 at a rear end, and the hanger member 10 is disposed such that the bridging portion 10b is positioned on a small diameter portion 9c formed at a middle portion of the cam member 9, and the small diameter portion 9c is straddled by the two block portions 10a.

In the cam member 9, a cam portion 19 whose outer peripheral surface is a cam surface bulges slightly forward of the small diameter portion 9c, and as shown in Fig. 6(b), the cam portion 19 of the cam member 9 corresponds to the cam projection portion 18 of the hanger member 10 in a state where the hanger member 10 is disposed.

Therefore, in the present embodiment, when the plug 6 is in the lock rotational position, the cam surface 18a of the hanger member 10 faces a standby plane 19b formed on the cam portion 19 of the cam member 9 in a noncontact state, and the hanger member 10 is held at a lower stroke end position with the stopper surface 7a being abutted on the bottom wall member 17.

In the present embodiment, a free length of the compression spring 4 is set such that the upper end thereof slightly projects from an upper end surface of the shielding portion 7 in a state of being accommodated in the shielding portion 7. As a result, as shown in Fig. 3(a), at a lock position of the hanger member 10 where the upper end surface of the shielding portion 7, that is an upper end surface of the hanger member 10 and a lower end surface of the spring receiving seat 3 are at substantially the same height, an appropriate initial deflection is applied to the compression spring 4, and the stopper surface 7a of the hanger member 10 is brought into pressure contact with the bottom wall member 17 by an appropriate pressure to prevent rattling or the like.

As described above, when the hanger member 10 is at the lower stroke end position, that is, in the lock position, the lock body 11 connected to the hanger member 10 projects from the rectangular opening 17a to the outside of the frame 1 and is locked to a steering shaft in a mounted state to the steering column to regulate the operation to the steering.

Further, when the hanger member 10 is at the lower stroke end position, as shown in Fig. 3(a) and Fig. 5, the upper end of the compression spring 4 is substantially and entirely closed by the spring receiving seat 3, and the side wall is entirely covered by the shielding portion 7 except the opening of the slit 8, and further, the slit 8 faces the inner wall surface of the lock portion accommodation recess 2 in addition to that an opening width of the slit 8 is narrow, so that all external access paths to the compression spring 4 are virtually blocked, and thus improper pulling of the compression spring 4 out of the housing is completely prevented.

From this state, as shown in Fig. 6(c), when the plug 6 is rotated in an unlock position direction, the upward pushing force of the cam surface 18a of the hanger member 10 is loaded by the cam surface 19a of the cam member 9. Accordingly, the hanger member 10 moves upward as the spring receiving seat 3 is swallowed into the slit 8 (with reference to Fig. 3 (b)).

In the present embodiment in which a hanging dimension of the spring receiving seat 3 substantially corresponds to a vertical stroke length of the hanger member 10, and a ceiling surface of the hanger member 10 and a lower end of the spring receiving seat 3 are set to be substantially flush with each other in the lock position, since a moving space of the hanger member 10 to the unlock position is secured between the hanger member 10 and the ceiling surface around the spring receiving seat 3 of the lock portion accommodation recess 2, the lock portion 5 can be moved to the unlocked state where the lock portion 5 is unlocked from the steering shaft.

This application is based on the Japanese Patent Application filed on Mar. 30, 2017 (Japanese Patent Application No. 2017-067971) .

### [Reference Signs List]

- 1: frame
- 2: lock portion accommodation recess
- 3: spring receiving seat
- 4: compression spring
- 5: lock portion
- 6: plug
- 7: shielding portion
- 8: slit
- 9: cam member
- 10: hanger member
- 11: lock body

## Claims

1. A steering lock device comprising:
a lock portion (5) which is held in a lock portion accommodation recess (2) formed in a frame (1) and is freely movable between a lock position and an unlock position; and
a plug (6) which is rotatably operated from an outside of the frame (1) and is configured to move the lock portion (5) to the unlock position against a reaction force of a compression spring (4),
wherein one end of the lock portion (5) is biased toward the lock position by the compression spring (4) which is supported by a spring receiving seat (3) formed at a ceiling portion of the lock portion accommodation recess (2), and
wherein the spring receiving seat (3) is formed to project from a ceiling surface of the lock portion accommodation recess (2) toward an opposite surface,
wherein the lock portion (5) is configured to cover an abutting side end of the compression spring (4) which is abutted on the lock portion (5), and is provided with a shielding portion (7) fitted to a periphery of the spring receiving seat (3) in the unlock position,
**characterized in that** the compression spring (4) is completely covered by the shielding portion (7) over the entire length thereof, when the lock portion (5) is at the lock position, so that the access path to the compression spring (4) can be completely closed, and
a projecting height of the spring receiving seat (3) and a projecting height of the shielding portion (7) are substantially the same as a stroke length of the lock portion (5), and
a tip end of the shielding portion (7) corresponds to a height of a tip end of the spring receiving seat (3) when the lock portion (5) is at the lock position.

2. The steering lock device according to claim 1,
wherein the shielding portion (7) has a cylindrical shape which surrounds the compression spring (4) around an entire length thereof when the lock portion (5) is at the lock position.

3. The steering lock device according to claim 2,
wherein the spring receiving seat (3) has a plate shape with an elongated rectangular cross section having a plate thickness narrower than an outer diameter of the compression spring (4), and
wherein the shielding portion (7) includes a slit (8) which allows advancing and retracting of the spring receiving seat (3).

4. The steering lock device according to any one of claims 1 to 3,
wherein the lock portion (5) is driven by a cam member (9) connected to the plug (6), and wherein the compression springs (4) are disposed at positions so as to sandwich the cam member (9).

5. The steering lock device according to claim 4,
wherein the lock portion (5) includes a hanger member (10) driven by the plug (6) and a lock body (11) which is connected to the hanger member (10), and is configured to be advanced to and retracted from a steering column, and
wherein the compression springs (4) are disposed at point-symmetrical positions with respect to a center of a cross section of the lock body (11), the cross section being orthogonal to a moving direction of the lock body (11).

## Patentansprüche

1. Lenkschlossvorrichtung, welche aufweist:
einen Verriegelungsbereich (5), der in einer in einem Rahmen (1) ausgeformten Verriegelungsbereichaufnahmeausnehmung (2) gehalten ist und der zwischen einer Verriegelungsstellung und einer Entriegelungsstellung frei bewegbar ist;
sowie einen Zapfen (6), welcher von außerhalb des Rahmens (1) drehbar betätigt wird und welcher dazu vorgesehen ist, den Verriegelungsbereich (5) gegen eine Reaktionskraft einer Druckfeder (4) in die Verriegelungsstellung zu bewegen,
wobei ein Ende des Verriegelungsbereichs (5) durch die Druckfeder (4) in Richtung der Verriegelungsstellung vorgespannt ist, wobei die Druckfeder (4) durch einen an einem Deckenbereich der
Verriegelungsbereichaufnahmeausnehmung (2) ausgebildeten Federaufnahmesitz (3) gelagert ist und
wobei der Federaufnahmesitz (3) so ausgebildet ist, dass er über eine Deckenfläche der Verriegelungsbereichaufnahmeausnehmung (2) in Richtung einer gegenüberliegenden Fläche übersteht,
wobei der Verriegelungsbereich (5) dazu vorgesehen ist, ein mit dem Verriegelungsbereich (5) im Anschlag befindliches seitliches Anschlagsende der Druckfeder (4) abzudecken, und wobei der Verriegelungsbereich (5) einen Abschirmbereich (7) aufweist, der in der Entriegelungsstellung an eine Peripherie des Federaufnahmesitzes (3) angebaut ist,
**dadurch gekennzeichnet, dass**
die Druckfeder (4) über ihre gesamte Länge vollständig durch den Abschirmbereich (7) abgedeckt ist, wenn der Verriegelungsbereich (5) sich in der Verriegelungsstellung befindet, so dass der Zugangsweg zu der Druckfeder (4) vollständig geschlossen werden kann, und dass
eine Überstandhöhe des Federaufnahmesitzes (3) und eine Überstandhöhe des Abschirmbereichs (7) im Wesentlichen einer Hublänge des Verriegelungsbereichs (5) entsprechen und dass eine Endspitze des Abschirmbereichs (7) einer Höhe einer Endspitze eines Federaufnahmesitzes (3) entspricht, wenn der Verriegelungsbereich (5) sich in der Verriegelungsstellung befindet.

2. Lenkschlossvorrichtung nach Anspruch 1,
wobei der Abschirmbereich (7) eine Zylinderform aufweist und die Druckfeder (4) in ihrer ganzen Länge umgibt, wenn der Verriegelungsbereich (5) sich in der Verriegelungsstellung befindet.

3. Lenkschlossvorrichtung nach Anspruch 2,
wobei der Federaufnahmesitz (3) plattenförmig ist und einen länglichen rechteckigen Querschnitt sowie eine Plattendicke aufweist, die geringer ist als ein Außendurchmesser der Druckfeder (4) und
wobei der Abschirmbereich (7) einen Schlitz (8) aufweist, durch welchen der Federaufnahmesitz (3) vorgeschoben und zurückgezogen werden kann.

4. Lenkschlossvorrichtung nach einem der Ansprüche 1 bis 3,
wobei der Verriegelungsbereich (5) durch ein mit dem Zapfen (6) verbundenes Nockenelement (9) angetrieben wird
und wobei die Druckfedern (4) sandwichartig an Positionen um das Nockenelement (9) angeordnet sind.

5. Lenkschlossvorrichtung nach Anspruch 4,
wobei der Verriegelungsbereich (5) ein durch den Zapfen (6) angetriebenes Hängeteil (10) sowie einen mit dem Hängeteil (10) verbundenen Verriegelungskörper (11) aufweist und dazu vorgesehen ist, zu einer Lenksäule vorgeschoben und von der Lenksäule zurückgezogen zu werden, und wobei die Druckfedern (4) an in Bezug auf einen Mittelpunkt eines Querschnitts des Verriegelungskörpers (11) punktsymmetrischen Positionen angeordnet sind, wobei der Querschnitt orthogonal zu einer Bewegungsrichtung des Verriegelungskörpers (11) angeordnet ist.

## Revendications

1. Dispositif de verrou de direction, comprenant :
une partie de verrouillage (5) qui est retenue dans une encoche-logement de partie de verrouillage (2) formée dans un cadre (1) et est librement mouvable entre une position de verrouillage et une position de déverrouillage ; et
un bouchon (6) qui est opéré en manière tournable d'un extérieur du cadre (1) et est configuré à mouvoir la partie de verrouillage (5) dans la position de déverrouillage contre une force de réaction d'un ressort de compression (4) ;
où une extrémité de la partie de verrouillage (5) est pré-tensionnée vers la position de verrouillage par le biais du ressort de compression (4) qui est supporté par un siège recevant de ressort (3) formé sur une partie de plafond de l'encoche-logement de partie de verrouillage (2), et
où le siège recevant de ressort (3) est formé d'une telle manière qu'il saillit d'une surface de plafond de l'encoche-logement de partie de verrouillage (2) vers une surface opposée,
où la partie de verrouillage (5) est prévue à couvrir une extrémité latérale jouxtante du ressort de compression (4) qui jouxte la partie de verrouillage (5) et
est pourvue d'une partie protective (7) ajoutée à une périphérie du siège recevant de ressort (3) dans la position de déverrouillage,
**caractérisé en ce que** le ressort de compression (4) est complètement couvert de la partie protective (7) à travers sa longueur entière si la partie de verrouillage (5) est dans la position de verrouillage, en sorte que la voie d'accès au ressort de compression (4) puisse être complètement fermée, et
une hauteur de saillie du siège recevant de ressort (3) et une hauteur de saillie de la partie protective (7) sont sensiblement égales à une longueur de course de la partie de verrouillage (5), et
une extrémité-bout de la partie protective (7) corresponde à une hauteur d'une extrémité-bout du siège recevant de ressort (3) si la partie de verrouillage est dans la position de verrouillage.

2. Dispositif de verrou de direction selon la revendication 1,
où la partie protective (7) présente une forme cylindrique entourant le ressort de compression (4) le long d'une longueur complète dudit ressort de compression si la partie de verrouillage (5) est dans la position de verrouillage.

3. Dispositif de verrou de direction selon la revendication 2,
où le siège recevant de ressort (3) présente une forme de plaque avec une coupe transversale rectangulaire oblongue, ayant une épaisseur-plaque inférieure à un diamètre extérieur du ressort de compression (4), et
où la partie protective (7) inclut une fente (8) permettant l'avancement et la rétraction du siège recevant de ressort (3).

4. Dispositif de verrou de direction selon l'une des revendications 1 à 3,
où la partie de verrouillage (5) est entraînée par un élément-came (9) raccordé au bouchon (6), et
où les ressorts de compression (4) sont disposés dans des positions ayant le membre-came (9) entre eux en forme de sandwich.

5. Dispositif de verrou de direction selon la revendication 4,
où la partie protective (5) inclut un élément-languette (10) entraîné par le bouchon (6) et un corps de verrouillage (11) raccordé au membre-languette (10), la partie protective (5) étant prévue à être avancée une colonne de direction à et retraite de la colonne de direction, et
où les ressorts de compression (4) sont disposés dans des positions symétriques par rapport à un centre d'une coupe transversale du corps de verrouillage (11), la coupe transversale étant orthogonale par rapport à une direction de mouvement du corps de verrouillage (11)
